# EUROPEAN PATENT APPLICATION

(11) **EP 3 379 505 A1**
(43) Date of publication of application: **26.09.2018**
(21) Application number: 18162257.2
(22) Date of filing: 16.03.2018
(51) Int. Cl.: G07G 1/00, G07G 1/14, G07G 3/00, G06Q 20/20

(54) **SALES DATA PROCESSING APPARATUS AND SALES DATA PROCESSING METHOD**

(30) Priority: 23.03.2017 JP 2017057533
(71) Applicant: Toshiba TEC Kabushiki Kaisha, Tokyo 141-0032 (JP)
(72) Inventor: MIYAGI, Daisuke, Tokyo, 141-8562 (JP)
(74) Representative: Hoffmann Eitle

(57) **Abstract**

According to an embodiment, a sales data processing apparatus includes first and second image-pickup cameras and a processor. The processor recognizes the object held by the operator's hand as the sold product on a basis of the first picked-up image of the first image-pickup camera. The processor detects motion of the operator's hand and the object held by the operator's hand on a basis of the second picked-up image of the second image-pickup camera. The processor determines whether the operator's behavior is unsuspicious or suspicious on a basis of the detection result based on the second picked-up image of the second image-pickup camera and the recognition result based on the first picked-up image of the first image-pickup camera.

## Description

### FIELD

An embodiment to be described here generally relates to a sales data processing apparatus and a sales data processing method for a sales data processing apparatus.

### BACKGROUND

In the past, sales data processing apparatuses are used in shops and other places. A sales data processing apparatus is operated by an operator to start operation. The sales data processing apparatus registers information of a product, which is specified by a code on the product or by the exterior appearance of the product, as sales data (sales register processing). The sales data processing apparatus executes predetermined processing such as payment processing.

A self-checkout apparatus is an apparatus of this kind. The self-checkout apparatus is operated by a customer as an operator. The self-checkout apparatus executes operation for the sales register processing, intermediate operation, and operation for payment processing.

Since a customer operates the self-checkout apparatus, countermeasures are taken against operational errors of inexperienced customers and dishonest behaviors.

Conceivable examples of operational errors and dishonest behaviors in a self-checkout apparatus are as follows. A customer does not execute operation of sales register processing for some products out of the products that the customer purchases. A customer mistakes the number of products to register when the customer purchases a plurality of same products.

Specific examples of the latter case (to mistake the number of products) are as follows. A customer executes operation of reading products but does not input a number when the customer purchases a plurality of same products. A customer executes operation of reading products but inputs a wrong number when the customer purchases a plurality of same products.

### SUMMARY OF THE INVENTION

The object of the present disclosure is to provide an improved sales data processing apparatus and an improved sales data processing method for a sales data processing apparatus.

According to an apparatus embodiment, a sales data processing apparatus that registers product information of a sold product as sales data, the sold product being specified by a code symbol on the product or an exterior appearance of the product, and executes predetermined processing on a basis of the registered sales data is provided that comprises:
a first image-pickup camera that picks up an image of a first image-pickup zone, to which an object held by an operator's hand is to be moved for registering the sales data, and outputs a first picked-up image;
a second image-pickup camera that picks up an image of a second image-pickup zone, the second image-pickup zone including the first image-pickup zone, and outputs a second picked-up image; and
a processor that
   recognizes the object held by the operator's hand as the sold product on a basis of the code symbol or the exterior appearance of the product in the first picked-up image,
   detects motion of the operator's hand and the object held by the operator's hand on a basis of the second picked-up image, and
   determines whether the operator's behavior is unsuspicious or suspicious on a basis of the detection result based on the second picked-up image and the recognition result based on the first picked-up image.

The sales data processing apparatus may further be such that
the processor determines that the operator's behavior is unsuspicious in a case where the processor determines that a predetermined right relation is established between the detection result based on the second picked-up image of the second image-pickup camera and the recognition result based on the first picked-up image of the first image-pickup camera.

The sales data processing apparatus may further be such that
the first image-pickup camera picks up an image of the first image-pickup zone in a first image-pickup direction, and
the second image-pickup camera picks up an image of the second image-pickup zone in a second image-pickup direction different from the first image-pickup direction.

The sales data processing apparatus may further be such that
the second image-pickup direction is a direction in which the operator is looked down from above.

The sales data processing apparatus may further be such that the processor
detects motion of the operator's hand holding the object and motion of the operator's hand holding no object on a basis of output from the second image-pickup camera, and
determines that the predetermined right relation is established between the detection result based on the second picked-up image of the second image-pickup camera and the recognition result based on the first picked-up image of the first image-pickup camera, in a case where the processor recognizes the sold product on a basis of output from the the first image-pickup camera after the processor detects the motion of the operator's hand holding the object and before the processor detects the motion of the operator's hand holding no object.

The sales data processing apparatus may further comprise:
an operation device that receives an input operation of an operator for registering the sales data, wherein
the processor determines that the predetermined right relation is established between the detection result based on the second picked-up image of the second image-pickup camera and the recognition result based on the first picked-up image of the first image-pickup camera, in a case where the operation device receives the input operation of the operator or the processor recognizes the sold product on a basis of the first picked-up image from the first image-pickup camera after the processor detects the motion of the operator's hand holding the object and before the processor detects the motion of the operator's hand holding no object.

The sales data processing apparatus may further be such that
the processor detects a motion direction of the operator's hand holding the object and a motion direction of the operator's hand holding no object on a basis of the second picked-up image output from the second image-pickup camera.

The sales data processing apparatus may further be such that
the operation device receives the input operation of the operator to input the number of the sold product(s), and
the processor
determines the number of the object(s) held by the operator's hand on a basis of information of the exterior appearance of the recognized sold product and the output from the second image-pickup camera, and
determines that the operator's behavior is unsuspicious in a case where the number input by the operation device is same as the determined number.

The sales data processing apparatus may further be such that
the processor alerts that the operator's behavior is suspicious in a case where the processor determines that the predetermined right relation is not established between the detection result based on the second picked-up image of the second image-pickup camera and the recognition result based on the first picked-up image of the first image-pickup camera.

According to a method embodiment, a sales data processing method of registering product information of a sold product as sales data, the sold product being specified by a code symbol on the product or an exterior appearance of the product, and executing predetermined processing on a basis of the registered sales data, the sales data processing method comprising:
picking up, by using a first image-pickup camera, an image of a first image-pickup zone, to which an object held by an operator's hand is to be moved for registering the sales data;
picking up, by using a second image-pickup camera, an image of a second image-pickup zone, the second image-pickup zone including the first image-pickup zone;
recognizing the object held by the operator's hand as the sold product on a basis of the code symbol or the exterior appearance of the product in a first picked-up image of the first image-pickup camera;
detecting motion of the operator's hand and the object held by the operator's hand on a basis of a second picked-up image of the second image-pickup camera; and
determining whether the operator's behavior is unsuspicious or suspicious on a basis of the detection result based on output from the second image-pickup camera and the recognition result based on output from the first image-pickup camera.

### BRIEF DESCRIPTION OF THE DRAWINGS

Fig. 1 is a perspective view showing an example of an exterior appearance of the self POS of the present embodiment.
Fig. 2 is a block diagram showing an example of a hardware configuration of the self POS of the present embodiment.
Fig. 3A is a block diagram showing an example of a functional configuration of one controller of the present embodiment.
Fig. 3B is a block diagram showing an example of a functional configuration of another controller of the present embodiment.
Fig. 3C is a block diagram showing an example of a functional configuration of another controller of the present embodiment.
Fig. 4 is a flowchart showing an example of detection processing that the self POS of the present embodiment executes.

### DETAILED DESCRIPTION

According to an embodiment, a sales data processing apparatus registers product information of a sold product as sales data, the sold product being specified by a code symbol on the product or an exterior appearance of the product, and executes predetermined processing, such as payment processing, on a basis of the registered sales data.

The sales data processing apparatus includes a first image-pickup camera, a second image-pickup camera, and a processor.

The first image-pickup camera picks up an image of a first image-pickup zone, to which an object held by an operator's hand is to be moved for registering the sales data, and outputs a first picked-up image.

The second image-pickup camera picks up an image of a second image-pickup zone, the second image-pickup zone including the first image-pickup zone, and outputs a second picked-up image.

The processor recognizes the object held by the operator's hand as the sold product on a basis of the code symbol or the exterior appearance of the product in the first picked-up image.

The processor detects motion of the operator's hand and the object held by the operator's hand on a basis of output from the second image-pickup camera.

Further, the processor determines whether the operator's behavior is unsuspicious or suspicious on a basis of the detection result based on the second picked-up image and the recognition result based on the first picked-up image.

An embodiment will be described with reference to the drawings. In the drawings, the same symbols denote the same or similar hardware and software.

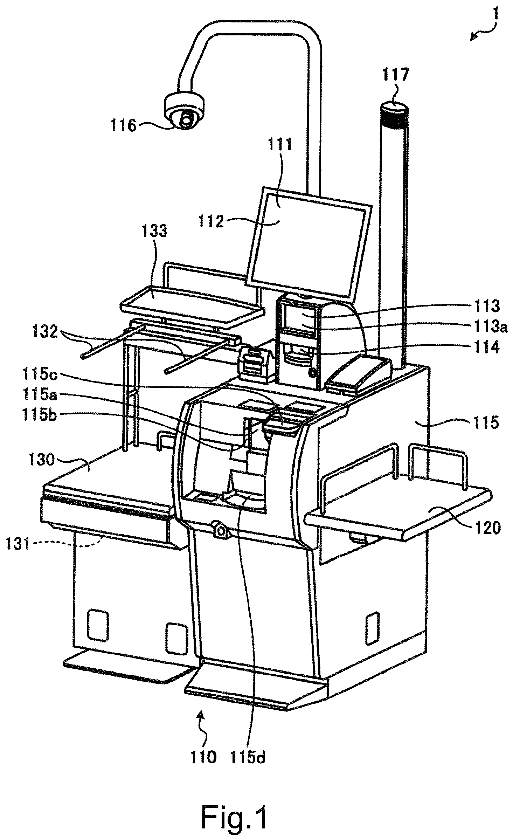

In the present embodiment, a self-checkout apparatus (hereinafter, referred to as self POS) will be described as an example of a sales data processing apparatus. Fig. 1 is a perspective view showing an example of an exterior appearance of the self POS 1.

The self POS 1 is an apparatus operated by a customer as an operator.

The self POS 1 is operated by a customer, and thereby executes sales register processing and payment processing for products sold in a shop.

In the sales register processing, firstly, the self POS 1 optically reads a symbol such as a barcode on a product sold to a customer (in other words, product that a customer purchases) in transaction, for example, and thereby obtains a product code of the product sold to the customer. Hereinafter, product sold to a customer (product that a customer purchases) in transaction will be simply referred to as a sold product.

In the sales register processing, next, the self POS 1 displays product information (product name, price, etc.) stored in association with the product code, and registers the product information as sales data to be added up.

In the payment processing, firstly, the self POS 1 calculates the total price of the transaction on a basis of the product information registered as the sales data to be added up, displays the total price, calculates the change on a basis of received money received from the customer, and displays the change.

In the payment processing, next, the self POS 1 instructs a change dispenser machine to dispense the change.

The product information and payment information after the payment processing (total price, received money amount, change amount, etc.) are printed, and a receipt is dispensed.

The self POS 1 includes the main body 110, the first table 120, and the second table 130.

The main body 110 is between the two tables 120 and 130. The main body 110 accommodates a controller (described later) that executes the sales register processing and the payment processing, and other components. In the following description, the sales register processing will sometimes be referred to as data register processing.

The first table 120 is a table on which a basket that contains products before the data register processing is mounted. The first table 120 is fixed on a side surface of the main body 110.

The second table 130 is a table on which data-registered products are mounted. The second table 130 is opposite to the first table 120, the main body 110 being therebetween.

The second table 130 includes the hooks 132 and the auxiliary table 133. A bag for receiving data-registered products is hung on the hooks 132. Data-registered products are temporarily placed on the auxiliary table 133 before they are put in the bag.

A customer places fragile and deformable products such as eggs and bread, for example, on the auxiliary table 133, and puts them in the bag at the end.

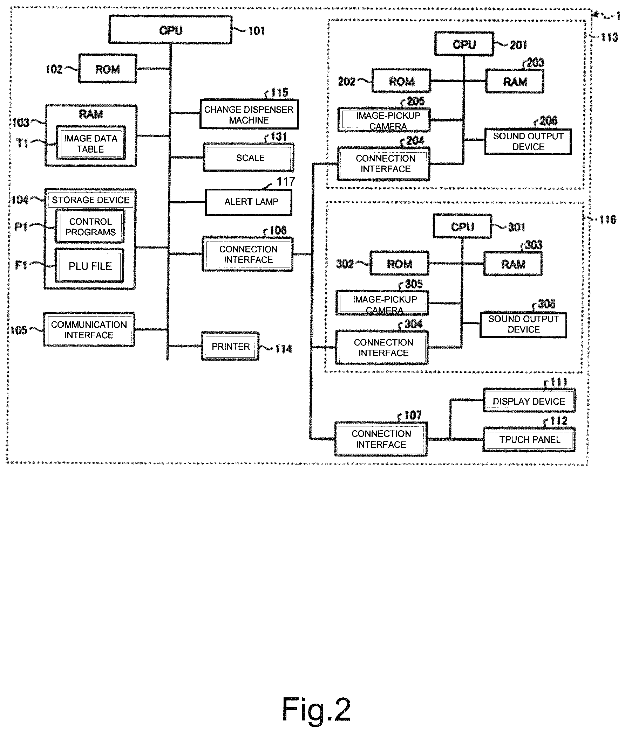

Further, the second table 130 includes the built-in scale 131 (see Fig. 2).

The self POS 1 determines whether data of the products put in the bag are appropriately registered or not on a basis of output from the scale 131.

The self POS 1 may determine that by confirming the data register processing and the timing at which the customer puts the products in the bag.

Further, the self POS 1 may determine that by prestoring the reference weight of each product as product information, and comparing the reference weight of a data-registered product with the increment of the measured value of the scale 131.

Note that the first table 120 of a self POS may also include a built-in scale.

A self POS of this type confirms that the total weight of sold products after the data register processing is the same as the total weight of sold products before the data register processing.

A customer as an operator holds a sold product on the first table 120 of the self POS 1 with his hand, operates the main body 110 for data register processing of this product, and places this product on the second table 130.

The customer repeats this behavior. Further, after the customer relocates all the sold products from the first table 120 to the second table 130, the customer operates the main body 110 for the payment processing.

The main body 110 includes the display device 111, the touch panel 112, the product reader device 113, the printer 114, the change dispenser machine 115, the monitoring device 116, and the alert lamp 117.

The display device 111 is, for example, a liquid crystal display, and displays information for an operator.

For example, the display device 111 displays a guidance screen for providing information of how to operate the self POS 1 to a customer, various input screens, and a register screen for displaying product information of a product read by the product reader device 113.

Further, the display device 111 displays, for example, a payment screen for displaying the total price of products, the received money amount, the change amount, and the like, and for selecting a payment method.

The touch panel 112 is an example of an operation device. The touch panel 112 is layered on the surface of the display device 111, and receives various input operations depending on information displayed on the display device 111.

The product reader device 113 reads information from a sold product (recognizes a product).

Specifically, the product reader device 113 picks up an image of a sold product, which is held by the customer's hand over the reader window 113a, and obtains an image of the sold product. The product reader device 113 searches data on a basis of the obtained image, and obtains product information of the sold product.

Note that data of some products cannot be registered even if a customer holds the products over the reader window 113a.

An example of such products is delicatessen foods such as croquettes packed by a customer.

When an operator operates the self POS 1 to register data of such a product, the operator selects a sold product (product that customer purchases) from candidates displayed on the touch panel 112, and inputs the number of products as necessary.

The printer 114 prints product information, payment information, and the like and issues a receipt.

The change dispenser machine 115 includes the bill inlet slot 115a, the bill outlet slot 115b, the coin inlet slot 115c, and the coin outlet slot 115d in front of an operator.

The change dispenser machine 115 receives paid money from the bill inlet slot 115a and the coin inlet slot 115c. The change dispenser machine 115 outputs the change from the bill outlet slot 115b and the coin outlet slot 115d.

The monitoring device 116 monitors the operator's behavior for operating the self POS 1.

The monitoring device 116 picks up an image of a zone, with which an operator's behavior, especially motion of hands, can be confirmed.

The alert lamp 117 operates as necessary.

The alert lamp 117 is turned on or turned on and off rapidly, and thereby alerts people around the self POS 1 that there is a trouble in the self POS 1 and that it is necessary to call for a store worker.

Next, a hardware configuration of the self POS 1 will be described.

Fig. 2 is a block diagram showing an example of a hardware configuration of the self POS 1.

The self POS 1 further includes the processor 101, the ROM (Read Only Memory) 102, the RAM (Random Access Memory) 103, the storage device 104, the communication interface 105, and the connection interfaces 106 and 107.

The processor 101 includes, for example, a CPU (Central Processing Unit). Hereinafter, the processor 101 will be referred to as the CPU 101.

The CPU 101 controls overall behaviors of the self POS 1.

The ROM 102 stores various programs and data.

The RAM 103 temporarily stores various programs, and rewritably stores various data. Further, the RAM 103 stores the image data table T1.

Note that the image data table T1 may be stored in not the RAM 103 but another storage medium such as the storage device 104, or may be stored in another device such as a store server.

The storage device 104 includes a nonvolatile storage medium such as an HDD (Hard Disk Drive) and an SSD (Solid State Drive).

The storage device 104 stores the control programs P1 and the PLU file F1.

Note that the PLU file F1 may be stored in not the storage device 104 but another storage medium, or may be stored in another device such as a store server.

The control programs P1 include programs for realizing the operating system and functions of the self POS 1.

The control programs P1 include programs for realizing characteristic functions of the present embodiment.

The PLU file F1 is a product file that stores information of each of various products sold in a shop for sales register processing of the product.

The PLU file F1 stores a product code, product information, a feature-amount-for-checkup, a recognition category, and the like in association with each other for each product.

The product code is identifier information for identifying a product and is expressed by a numerical value of a predetermined number of digits, for example.

The product information includes information such as a product category of a product, a product name, and price.

The feature-amount-for-checkup is information of the exterior appearance of a product.

Specifically, the feature-amount-for-checkup is parameter information indicating the feature of the exterior appearance of a product. The feature of the exterior appearance of a product includes the standard shape of the product and the color, pattern, texture, and the like of the surface.

Note that the feature-amount-for-checkup is data-for-checkup used to determine similarity of a product when recognizing a product (recognizing a general object (described later)).

The recognition category is information for instructing a recognition method used to recognize a product. As a recognition method, code symbol recognition or general object recognition is selected.

The code symbol recognition is a method of recognizing a product by reading a product code that a code symbol on the product indicates. The code symbol includes a barcode, a two-dimensional code, or the like. The code symbol recognition is a recognition method for a product that has a code symbol.

The general object recognition is a recognition method for a product that has no code symbol.

The general object recognition is also referred to as object recognition. The general object recognition is a method of recognizing a product by comparing a picked up image of a product with a feature-amount-for-checkup.

Note that the feature-amount-for-checkup and the recognition category may be stored in a file different from the PLU file F1.

Further, in the present embodiment, the PLU file F1 stores the standard size of a product as a part of the feature-amount-for-checkup. Note that, in an implementation, the standard size of a product may be stored in not the PLU file F1 but another file.

The CPU 101, the ROM 102, the RAM 103, the storage device 104, the communication interface 105, the connection interface 106, the printer 114, the change dispenser machine 115, and the scale 131 are connected to each other via a bus.

Further, the display device 111 and the touch panel 112 are connected to the connection interface 106 via the connection interface 107.

Further, the product reader device 113 and the monitoring device 116 are connected to the connection interface 106.

The product reader device 113 includes the processor 201, the ROM 202, the RAM 203, the connection interface 204, the image-pickup camera 205, and the sound output device 206.

The processor 201, the ROM 202, the RAM 203, the connection interface 204, the image-pickup camera 205, and the sound output device 206 are connected to each other via a bus.

The processor 201 is, for example, a CPU. Hereinafter, the processor 201 will be referred to as the CPU 201.

The CPU 201 controls overall behaviors of the product reader device 113.

The ROM 202 stores various programs and data.

The RAM 203 temporarily stores various programs, and rewritably stores various data.

The connection interface 204 is connected to the connection interface 106.

The image-pickup camera 205 is an example of a first image-pickup unit (first image-pickup camera).

The image-pickup camera 205 picks up an image of a first image-pickup zone in a first image-pickup direction.

The first image-pickup zone is a zone to which an object or a sold product held by an operator's hand is to be moved for sales register processing (for registering sales data).

The first image-pickup zone is a zone in front of the reader window 113a, the zone being defined by the reader window 113a. In other words, the first image-pickup zone is a zone outside the product reader device 113, the image-pickup camera 205 in the product reader device 113 being capable of picking up an image of the zone through the reader window 113a.

The first image-pickup direction is a direction from the inside of the product reader device 113 to the outside of the product reader device 113 through the reader window 113a. In other words, the first image-pickup direction is a direction from the back to the front of the self POS 1.

For example, a customer (operator) holds a product on the first table 120 with his hand. Further, the customer moves the hand holding the product, and holds the product over the reader window 113a (see Fig. 1) of the product reader device 113. When the customer holds the product over the reader window 113a (see Fig. 1), the product held by the customer's hand enters the first image-pickup zone. Further, when the customer moves the hand holding the product in order to place the product on the second table 130, the product held by the customer's hand gets out of the first image-pickup zone.

The image-pickup camera 205 picks up an image of the customer's hand held over the reader window 113a (see Fig. 1) and the product held by the hand, and outputs a picked-up image.

Where the picked-up image contains a code symbol on the product, the CPU 201 recognizes the product by means of the code symbol recognition.

Further, where the picked-up image contains no code symbol, the CPU 201 recognizes the product on a basis of the exterior appearance of the product in the picked-up image by means of the general object recognition.

When an error occurs or the like, the sound output device 206 outputs a sound to thereby alert the operator and people around the self POS 1 that there is a trouble.

The monitoring device 116 includes the processor 301, the ROM 302, the RAM 303, the connection interface 304, the image-pickup camera 305, and the sound output device 306.

The processor 301, the ROM 302, the RAM 303, the connection interface 304, the image-pickup camera 305, and the sound output device 306 are connected to each other via a bus.

The processor 301 is, for example, the CPU 301.

The CPU 301 controls overall behaviors of the monitoring device 116.

The ROM 302 stores various programs and data.

The RAM 303 temporarily stores various programs, and rewritably stores various data.

The connection interface 304 is connected to the connection interface 106.

When an error occurs or the like, the sound output device 306 outputs a sound to thereby alert the operator and people around the self POS 1 that there is a trouble.

The image-pickup camera 305 is an example of a second image-pickup unit (second image-pickup camera).

The image-pickup camera 305 picks up an image of a second image-pickup zone in a second image-pickup direction different from the first image-pickup direction of the image-pickup camera 205.

The second image-pickup direction is a direction in which the operator's head is looked down from above.

In other words, the image-pickup camera 205 picks up an image in the direction from the back to the front of the self POS 1. Meanwhile, the image-pickup camera 305 picks up an image in the direction in which the operator's head is looked down from above.

Further, the second image-pickup zone of the image-pickup camera 305 is a predetermined zone including the first image-pickup zone, the image-pickup camera 205 picking up an image of the first image-pickup zone.

In other words, as described above, the first image-pickup zone of the image-pickup camera 205 is a zone in front of the reader window 113a.

To the contrary, the second image-pickup zone of the image-pickup camera 305 at least includes the first image-pickup zone, a plan-view zone of the first table 120, and a plan-view zone of the second table 130.

Further, more preferably, the image-pickup camera 305 picks up an image of the second image-pickup zone including the bill inlet slot 115a, the bill outlet slot 115b, the coin inlet slot 115c, and the coin outlet slot 115d.

Further, preferably, the image-pickup camera 305 is, for example, an RGB-D camera or a stereo camera.

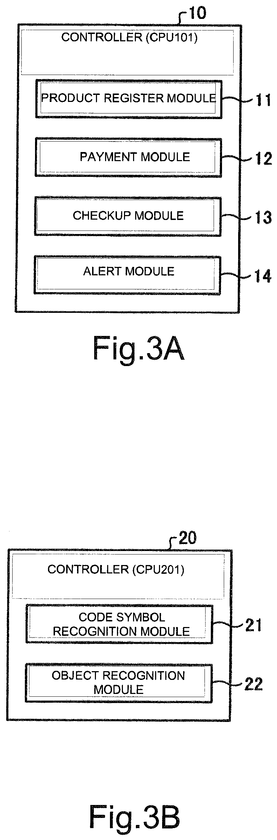

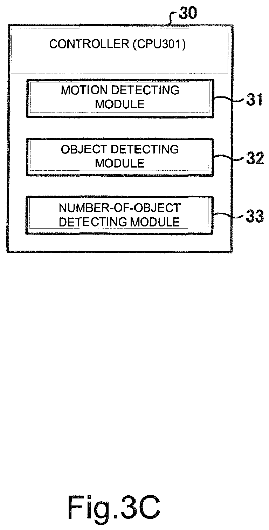

Fig. 3A is a block diagram showing an example of a functional configuration of the controller 10. Fig. 3B is a block diagram showing an example of a functional configuration of the controller 20. Fig. 3C is a block diagram showing an example of a functional configuration of the controller 30.

Fig. 3A shows an example of functional modules of the controller 10.

Fig. 3B shows an example of functional modules of the controller 20.

Fig. 3C shows an example of functional modules of the controller 30.

The controller 10 includes the aforementioned CPU 101, the ROM 102, and the RAM 103.

The CPU 101 executes programs stored in the ROM 102, and thereby realizes various functional modules corresponding to the programs. The CPU 101 of the controller 10 functions as the product register module 11, the payment module 12, the checkup module 13, and the alert module 14.

The product register module 11 executes the sales register processing. In other words, the product register module 11 stores product information of a sold product read by the product reader device 113 in the RAM 103 as sales data to be added up.

The payment module 12 executes the payment processing.

In other words, the payment module 12 calculates the total price of the transaction on a basis of product information registered by the product register module 11. The payment module 12 receives/supplies money from/to a customer via the change dispenser machine 115, and issues a receipt.

The checkup module 13 will be described later.

The alert module 14 is an example of an alert unit, and controls the operation status (turned on, turned on and off rapidly, and turned off) of the alert lamp 117.

The controller 20 includes the CPU 201, the ROM 202, and the RAM 203.

The CPU 201 executes programs stored in the ROM 202, and thereby realizes various functional modules corresponding to the programs. The CPU 201 of the controller 20 functions as the code symbol recognition module 21 and the object recognition module 22.

The code symbol recognition module 21 and the object recognition module 22 are examples of a recognition unit. Each of the code symbol recognition module 21 and the object recognition module 22 recognizes a sold product on a basis of a picked-up image output from the image-pickup camera 205.

The code symbol recognition module 21 recognizes a code symbol in a picked-up image output from the image-pickup camera 205.

The object recognition module 22 executes the general object recognition on a basis of an exterior appearance of a product in a picked-up image output from the image-pickup camera 205.

The controller 30 includes the CPU 301, the ROM 302, and the RAM 303.

The CPU 301 executes programs stored in the ROM 302, and thereby realizes various functional modules corresponding to the programs. The CPU 301 of the controller 30 functions as the motion detecting module 31, the object detecting module 32, and the number-of-object determining module 33.

The motion detecting module 31 analyzes a picked-up image output from the image-pickup camera 305, and detects the motion of a hand. Hereinafter, the picked-up image output from the image-pickup camera 305 will sometimes be simply referred to as output from the image-pickup camera 305.

The object detecting module 32 analyzes the output from the image-pickup camera 305, and detects an object held by the operator's hand.

In other words, the object detecting module 32 detects that the operator's hand holds an object.

Note that, for example, RealSense technology of Intel Corporation is applicable to the motion detecting module 31 and the object detecting module 32.

The number-of-object determining module 33 determines the number of objects (sold products) detected by the object detecting module 32 on a basis of information of exterior appearances of products and output from the image-pickup camera 305.

Note that the information of an exterior appearance of a product that the number-of-object determining module 33 uses is the aforementioned feature-amount-for-checkup stored in the PLU file F1, for example, in association with a selected sold product, which is recognized by the code symbol recognition module 21 and the object recognition module 22.

Further, as described above, the information of an exterior appearance of a product includes the standard shape of the product and the standard size of the product.

The number-of-object determining module 33 compares the obtained standard shape of the product with the picked-up image output from the image-pickup camera 305, and can thereby determine the number of objects.

Further, for example, by using the aforementioned RealSense technology, the number-of-object determining module 33 calculates the distance between the object in the picked-up image output from the image-pickup camera 305 and the image-pickup camera 305. Further, the number-of-object determining module 33 is capable of determining the number of objects on a basis of the calculated distance and the standard size of a product.

Further, the checkup module 13 determines whether input of the sales register processing by an operator matches output derived from the image-pickup camera 305 or not.

Here, the "input of the sales register processing" means input depending on operation of an operator that the touch panel 112 receives. Alternatively, the "input of the sales register processing" means output derived from the image-pickup camera 205. Note that the "output derived from the image-pickup camera 205" may be a detection result of detecting that an object is held over the reader window 113a (output from the image-pickup camera 205). Alternatively, the "output derived from the image-pickup camera 205" may be output from the code symbol recognition module 21 or the object recognition module 22 based on output from the image-pickup camera 205 (recognition result).

Further, the "output derived from the image-pickup camera 305" means output from the motion detecting module 31 based on the image-pickup camera 305 (detection result), output from the object detecting module 32 (detection result), and output from the number-of-object determining module 33 (determination result).

How the checkup module 13 determines the matching will be described more specifically hereinafter.

First of all, "matching" means the relation between the "output derived from the image-pickup camera 305" and the "input of the sales register processing" where an operator's behavior is unsuspicious. In other words, "matching" means that a predetermined right relation is established between the "output derived from the image-pickup camera 305" and the "input of the sales register processing".

The checkup module 13 determines the matching to thereby determine whether an operator's behavior is unsuspicious or suspicious.

For example, the checkup module 13 determines "matching" where there is an input of the sales register processing after motion of an operator's hand holding an object and before motion of a hand holding no object.

In other words, the motion detecting module 31 and the object detecting module 32 detect motion of the operator's hand holding an object, and next, the operator behaves rightly before the motion detecting module 31 and the object detecting module 32 detect motion of the hand holding no object. Then, for example, the touch panel 112 receives operation of the operator for sales register processing.

In other words, the motion detecting module 31 and the object detecting module 32 detect motion of the operator's hand holding an object, and next, there is an input depending on operation of an operator that the touch panel 112 receives before the motion detecting module 31 and the object detecting module 32 detect motion of the hand holding no object. In this case, the checkup module 13 determines "matching".

Further, for example, the motion detecting module 31 and the object detecting module 32 detect motion of the operator's hand holding an object, and next, the operator behaves rightly before the motion detecting module 31 and the object detecting module 32 detect motion of the hand holding no object. Then, the code symbol recognition module 21 or the object recognition module 22 recognizes a sold product.

In other words, the motion detecting module 31 and the object detecting module 32 detect motion of the operator's hand holding an object, and next, the code symbol recognition module 21 or the object recognition module 22 recognizes a sold product before the motion detecting module 31 and the object detecting module 32 detect motion of the hand holding no object. Then, the checkup module 13 determines "matching".

To the contrary, where there is no input of the sales register processing after motion of an operator's hand holding an object and before motion of a hand holding no object, an operator's behavior may be suspicious. Specifically, for example, an operator may not hold a sold product over the reader window 113a after motion of an operator's hand holding an object and before motion of a hand holding no object.

In other words, where there is no input of the sales register processing after motion of a hand holding an object and before motion of a hand holding no object, the checkup module 13 determines "non-matching" (nonmatching).

Note that, where there is no input of the sales register processing after motion of a hand holding an object and before motion of a hand holding no object, the checkup module 13 may determine non-matching (nonmatching) after a predetermined event is detected subsequently.

Examples of a predetermined event include increase of a value measured by the scale 131, to detect that a hand holding no object holds an object on the first table 120, and the like.

Note that the checkup module 13 may determine that also on a basis of the motion direction of a hand holding an object and the motion direction of a hand holding no object.

In other words, where there is input of the product register processing while a hand holding an object moves in the forward direction (from the first table 120 to the second table 130), the checkup module 13 may determine "matching".

Further, where there is no input of the product register processing while a hand holding an object moves in the forward direction, and where the hand holding no object moves straight back in the opposite direction (from the second table 130 to the first table 120), the checkup module 13 may determine "nonmatching".

Further, the checkup module 13 may determine that also on a basis of output from the number-of-object determining module 33. For example, where output from the number-of-object determining module 33 is the same as an input value input by an operator, the checkup module 13 determines "matching".

Here, where an operator inputs a numerical value as the number of products by using the touch panel 112, the checkup module 13 treats the numerical value as an input value input by an operator.

Further, where an operator inputs no numerical value, the checkup module 13 determines that assuming that an operator inputs "1" (input value=1).

In order to operate the self POS 1 to execute the sales register processing for a plurality of same products, an operator manually inputs the number via the touch panel 112 before (or after) the operator holds the plurality of same products over the product reader device 113.

Where the number (sales number or purchase number) of a sold product held over the product reader device 113 is 1, it is not necessary to manually input the number.

For example, a customer as an operator holds two oranges with his hand, holds the two oranges over the reader window 113a without manually inputting the number, and puts the oranges in a bag on the second table 130.

In this case, the object recognition module 22 recognizes that the products are oranges.

The number-of-object determining module 33 receives the recognition result, and determines that the number of oranges is two (or at least determines that the number of oranges is not one).

Then, the checkup module 13 receives the determination result, and determines that input value input by an operator does not match (nonmatches) output from the number-of-object determining module 33.

Where the checkup module 13 outputs the non-matching (nonmatching) determination result, the alert module 14 alerts that via the alert lamp 117.

Hereinafter, how the self POS 1 executes the detection processing to deal with an operator's suspicious behaviors will be described. Examples of suspicious behaviors include a case where the sales register processing for a product is skipped, and a case where the number of products under the sales register processing is incorrect.

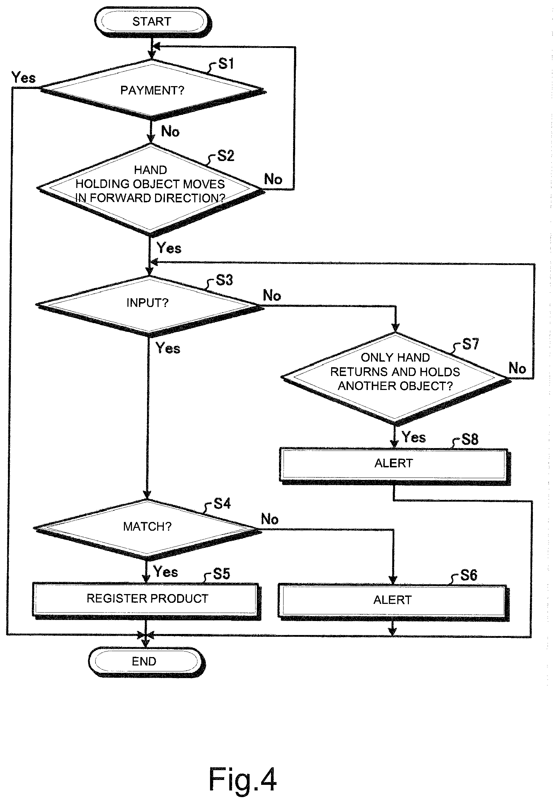

Fig. 4 is a flowchart showing an example of detection processing that the self POS 1 executes. In this example, determination of the detection processing is executed also on a basis of the motion direction of a hand.

In the detection processing of Fig. 4, in Step S1, the CPU 101 (the controller 10) determines whether it is the timing for payment or not.

Here, the payment means the payment processing of the payment module 12. Where the CPU 101 determines that it is the timing for payment (Step S1, Yes), the CPU 101 finishes the detection processing.

Where the CPU 101 determines that it is not the timing for payment (Step S1, No), the processing of the CPU 101 proceeds to Step S2.

The CPU 101 determines whether operation of an operator for finishing the sales register processing and for instructing to proceed to payment is input in the touch panel 112 or not. As a result, the CPU 101 determines whether it is the timing for payment or not.

In Step S2, the CPU 101 determines whether a hand holding an object moves in the forward direction or not on a basis of output (detection result) from the motion detecting module 31 and the object detecting module 32.

Where the CPU 101 does not detect that a hand holding an object moves in the forward direction (Step S2, No), the processing of the CPU 101 returns to Step S1.

Where the CPU 101 detects that a hand holding an object moves in the forward direction (Step S2, Yes), the processing of the CPU 101 proceeds to Step S3.

In Step S3, the CPU 101 determines whether there is input of the sales register processing as described above or not.

In Step S3, where the CPU 101 determines that there is input (Step S3, Yes), the processing of the CPU 101 proceeds to Step S4.

In Step S4, the CPU 101 determines matching (failing to nonmatching) or nonmatching on a basis of output from the checkup module 13.

Where the CPU 101 determines matching (failing to nonmatching) (Step S4, Yes), the processing of the CPU 101 proceeds to Step S5.

In Step S5, the CPU 101 executes the sales register processing on a basis of input from the sales register processing.

In Step S4, where the CPU 101 determines non-matching (nonmatching) (Step S4, No), the processing of the CPU 101 proceeds to Step S6.

In Step S6, the controller 10 controls the alert module 14, and the alert module 14 operates the alert lamp 117 to alert. Then the controller 10 finishes the processing of Fig. 4.

In Step S3, where the CPU 101 determines that there is no input (Step S3, No), the processing of the CPU 101 proceeds to Step S7.

In Step S7, the CPU 101 determines whether only a hand holding no object returns in the direction toward the first table 120 (i.e., a hand moves in the opposite direction) and holds an object on the first table 120 or not on a basis of output (detection result) from the motion detecting module 31 and the object detecting module 32. In other words, the CPU 101 determines whether a hand holding no object returns and holds a next product or not.

In Step S7, where the CPU 101 does not determine that only a hand holding no object returns in the direction toward the first table 120 (i.e., a hand moves in the opposite direction) and holds an object on the first table 120 (Step S7, No), the processing of the CPU 101 returns to Step S3. The CPU 101 stands by for input of the sales register processing.

In Step S7, where the CPU 101 determines that a hand holding no object returns and holds a next product (Step S7, Yes), the processing of the CPU 101 proceeds to Step S8.

Then, in Step S8, the CPU 101 controls the alert module 14, and the alert module 14 operates the alert lamp 117 to alert. Then the CPU 101 finishes the processing.

As described above, according to the present embodiment, a processor (the CPU 101) of a self POS terminal determines matching on a basis of input of an operator for the sales register processing, motion of an operator's hand, the motion direction of the hand, presence of an object held by the hand, the number of objects held by the hand, and the like.

Further, the controller is capable of alerting where the controller determines nonmatching.

As a result, a store worker can know that a customer's, i.e., operator's, behavior is suspicious (for example, suspicious operation). Therefore the store worker can correct the operation of the customer for the self POS 1.

Therefore, according to the present embodiment, where the sales register processing for a sold product is skipped in the operator's operation for self-checkout, and where the number of sold products under the sales register processing is incorrect, it is possible to deal with such suspicious situations.

Note that, in the present embodiment, the self POS 1 includes the controllers 10, 20, and 30. The controller 10 includes the CPU 101, the controller 20 includes the CPU 201, and the controller 30 includes the CPU 301. Further, the CPU 101 realizes the product register module 11, the payment module 12, the checkup module 13, and the alert module 14. The CPU 201 realizes the code symbol recognition module 21 and the object recognition module 22. The CPU 301 realizes the motion detecting module 31, the object detecting module 32, and the number-of-object determining module 33.

Alternatively, one CPU may realize all the aforementioned functional modules. Alternatively, two CPUs or four or more CPUs may realize the aforementioned functional modules divisionally.

Further, in the present embodiment, the image-pickup camera 305 picks up an image in a direction in which the operator's head is looked down from above. However, the image-pickup direction of the image-pickup camera 305 is not limited to this. The image-pickup direction of the image-pickup camera 305 is at least different from the image-pickup direction of the image-pickup camera 205, and is not limited to the direction in which the operator's head is looked down from above.

Note that, programs executed by the self POS 1 of the present embodiment are prestored in a ROM and the like and supplied.

Installable or executable files of the programs to be executed by the self POS 1 of the present embodiment may be recorded in non-transitory computer readable recording media such as a CD-ROM, a flexible disk (FD), a CD-R, and a DVD (Digital Versatile Disk) and supplied.

Further, the programs to be executed by the self POS 1 of the present embodiment may be stored in a computer connected to a network such as the Internet, downloaded via the network, and supplied.

Further, the programs to be executed by the self POS 1 of the present embodiment may be supplied or distributed via a network such as the Internet.

The programs to be executed by the self POS 1 of the present embodiment have a module structure including the aforementioned functional modules (the product register module 11, the payment module 12, the checkup module 13, the alert module 14, the code symbol recognition module 21, the object recognition module 22, the motion detecting module 31, the object detecting module 32, and the number-of-object determining module 33).

The CPUs (processors) 101, 201, and 301 read the programs from the storage medium and execute the programs to thereby load the aforementioned modules in the main memories.

As a result, the product register module 11, the payment module 12, the checkup module 13, the alert module 14, the code symbol recognition module 21, the object recognition module 22, the motion detecting module 31, the object detecting module 32, and the number-of-object determining module 33 are created in the main memories.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A sales data processing apparatus (1) configured to register product information of a sold product as sales data, the sold product being specified by a code symbol on the product or an exterior appearance of the product, and to execute predetermined processing on a basis of the registered sales data, the sales data processing apparatus (1) comprising:
a first image-pickup camera (205) configured to pick up an image of a first image-pickup zone, to which an object held by an operator's hand is to be moved for registering the sales data, and to output a first picked-up image;
a second image-pickup camera (305) configured to pick up an image of a second image-pickup zone, the second image-pickup zone including the first image-pickup zone, and to output a second picked-up image; and
a processor (101) configured to
recognize the object held by the operator's hand as the sold product on a basis of the code symbol or the exterior appearance of the product in the first picked-up image,
detect motion of the operator's hand and the object held by the operator's hand on a basis of the second picked-up image, and
determine whether the operator's behavior is unsuspicious or suspicious on a basis of the detection result based on the second picked-up image and the recognition result based on the first picked-up image.

2. The sales data processing apparatus (1) according to Claim 1, wherein
the processor (101) is configured to determine that the operator's behavior is unsuspicious in a case where the processor (101) determines that a predetermined right relation is established between the detection result based on the second picked-up image of the second image-pickup camera (305) and the recognition result based on the first picked-up image of the first image-pickup camera (205).

3. The sales data processing apparatus according to Claim 1 or 2, wherein
the first image-pickup camera (205) is configured to pick up an image of the first image-pickup zone in a first image-pickup direction, and
the second image-pickup camera (305) is configured to pick up an image of the second image-pickup zone in a second image-pickup direction different from the first image-pickup direction.

4. The sales data processing apparatus (1) according to Claim 3, wherein
the second image-pickup direction is a direction in which the operator is looked down from above.

5. The sales data processing apparatus (1) according to one of Claims 2 to 4, wherein
the processor (101) is configured to
detect motion of the operator's hand holding the object and motion of the operator's hand holding no object on a basis of output from the second image-pickup camera (305), and
determine that the predetermined right relation is established between the detection result based on the second picked-up image of the second image-pickup camera (305) and the recognition result based on the first picked-up image of the first image-pickup camera (205), in a case where the processor (101) recognizes the sold product on a basis of output from the the first image-pickup camera (205) after the processor (101) detects the motion of the operator's hand holding the object and before the processor detects the motion of the operator's hand holding no object.

6. The sales data processing apparatus (1) according to Claim 5, further comprising:
an operation device (112) configured to receive an input operation of an operator for registering the sales data, wherein
the processor (101) is configured to determine that the predetermined right relation is established between the detection result based on the second picked-up image of the second image-pickup camera (305) and the recognition result based on the first picked-up image of the first image-pickup camera (205), in a case where the operation device (112) receives the input operation of the operator or the processor (101) recognizes the sold product on a basis of the first picked-up image from the first image-pickup camera (205) after the processor (101) detects the motion of the operator's hand holding the object and before the processor (101) detects the motion of the operator's hand holding no object.

7. The sales data processing apparatus (1) according to Claim 5 or 6, wherein
the processor (101) is configured to detect a motion direction of the operator's hand holding the object and a motion direction of the operator's hand holding no object on a basis of the second picked-up image output from the second image-pickup camera (305).

8. The sales data processing apparatus (1) according to Claim 6 or 7, wherein
the operation device (112) is configured to receive the input operation of the operator to input the number of the sold product(s), and
the processor (101) is configured to
determine the number of the object(s) held by the operator's hand on a basis of information of the exterior appearance of the recognized sold product and the output from the second image-pickup camera (305), and
determine that the operator's behavior is unsuspicious in a case where the number input by the operation device is same as the determined number.

9. The sales data processing apparatus according to one of Claims 2 to 8, wherein
the processor (101) is configured to alert that the operator's behavior is suspicious in a case where the processor (101) determines that the predetermined right relation is not established between the detection result based on the second picked-up image of the second image-pickup camera (305) and the recognition result based on the first picked-up image of the first image-pickup camera (205).

10. A sales data processing method of registering product information of a sold product as sales data, the sold product being specified by a code symbol on the product or an exterior appearance of the product, and executing predetermined processing on a basis of the registered sales data, the sales data processing method comprising:
picking up, by using a first image-pickup camera (205), an image of a first image-pickup zone, to which an object held by an operator's hand is to be moved for registering the sales data;
picking up, by using a second image-pickup camera (305), an image of a second image-pickup zone, the second image-pickup zone including the first image-pickup zone;
recognizing the object held by the operator's hand as the sold product on a basis of the code symbol or the exterior appearance of the product in a first picked-up image of the first image-pickup camera (205);
detecting motion of the operator's hand and the object held by the operator's hand on a basis of a second picked-up image of the second image-pickup camera (305); and
determining whether the operator's behavior is unsuspicious or suspicious on a basis of the detection result based on output from the second image-pickup camera (305) and the recognition result based on output from the first image-pickup camera (205).
